# EUROPÄISCHE PATENTSCHRIFT

(11) **EP 3 753 383 B1**
(45) Veröffentlichungstag und Bekanntmachung des Hinweises auf die Patenterteilung: **21.02.2024**
(21) Anmeldenummer: 20179246.2
(22) Anmeldetag: 10.06.2020
(51) Int. Cl.: A01B 15/02, A01B 23/02, A01B 35/26

(54) **SCHNEIDELEMENT**
CUTTING ELEMENT
ÉLÉMENT DE COUPE

(30) Priorität: 19.06.2019 AT 505532019
(43) Veröffentlichungstag der Anmeldung: 23.12.2020
(73) Patentinhaber: BOEHLERIT GmbH & Co.KG., 8605 Kapfenberg (AT)
(72) Erfinder: Bärnthaler, Walter, 8641 St. Marein im Mürztal (AT); Burböck, Hannes, 8652 Kindberg/Aumühl (AT)
(74) Vertreter: Wirnsberger & Lerchbaum Patentanwälte OG

(56) Entgegenhaltungen:
- EP-A1- 3 516 938
- EP-A1- 3 701 781
- AT-U1- 16 266
- DE-U1-202018 000 434
- US-A- 397 415

## Beschreibung

Die Erfindung betrifft ein Schneidelement aus Hartmetall für ein landwirtschaftliches Bodenbearbeitungswerkzeug zum Einschneiden in ein Erdreich, aufweisend eine Oberseite und eine Unterseite sowie eine Stirnseite, eine der Stirnseite gegenüberliegende Rückseite und zumindest eine Seitenfläche, wobei die Oberseite und die Unterseite über Stirnseite, Rückseite und die zumindest eine Seitenfläche verbunden sind und die Stirnseite einen Schneidbereich aufweist.

Des Weiteren betrifft die Erfindung eine Verwendung eines derartigen Schneidelementes.

In der Landwirtschaft ist eine gute Bodenaufbereitung im Vorfeld einer Aussaat für ein Erzielen eines guten Ernteergebnisses von essenzieller Bedeutung. Dabei ist ein vollständiger Schnitt durch das Erdreich mit Breitscharen oder dergleichen unter Durchtrennung des Unkrautes bzw. des Beikrautes notwendig, da das Unkraut bzw. Beikraut im Falle einer unvollständigen Durchtrennung weiter wachsen kann. Eine vollständige Durchtrennung des Unkrautes bzw. Beikrautes lockert das Erdreich auf. Ist hingegen eine Verdichtung des Erdreiches gegeben, kann in weiterer Folge Regenwasser vom Erdreich nicht mehr ausreichend aufgenommen werden und auch die Zufuhr von Grundwasser an die Wurzeln der Nutzpflanzen wird dadurch begrenzt.

Für die Bodenaufbereitung werden Bodenbearbeitungswerkzeuge verwendet, welche mit einem Traktor nachgezogen werden und mit welchen in das Erdreich eingeschnitten wird. Auf diese Weise wird das Erdreich getrennt und insbesondere Unkraut bzw. Beikraut abgetrennt. Um eine Verschleißfestigkeit der aus Stahl hergestellten Bodenbearbeitungswerkzeuge zu erhöhen, ist es aus dem Stand der Technik bekannt, dass die schneidaktiven Bereiche der Bodenbearbeitungswerkzeuge mit Schneidelementen aus Hartmetall bestückt werden.

Gemäß dem Stand der Technik sind hierfür verschleißfeste Schneidelemente aus Hartmetall bekannt, welche in einer Nut an einem Grundkörper eingesetzt und angelötet werden können. Die Schneidelemente sind in der Regel plättchenförmig mit geraden Schneidkanten ausgebildet, wie dies aus der DE 20 2018 000 434 U1 bekannt ist. Die aus dem Stand der Technik bekannten Schneidbereiche der Schneidelemente wirken sich insofern nachteilig aus, als das zu schneidende Unkraut an den geraden Schneidkanten ausweichen und vorbeigleiten kann und das Erdreich somit nicht oder nur unvollständig durchtrennt wird. Es besteht somit ein Bedarf an Schneidelementen, welche die vollständige Durchtrennung des Unkrautes bzw. des Beikrautes und des Erdreiches sicherstellen.

In der EP 3 701 781 A1, die Stand der Technik nach Artikel 54 (3) EPÜ darstellt, ist ein Schneidelement mit einem Schneidbereich mit stirnseitigen Zähnen beschrieben, wobei die Zähne zwischen den eigentlich schneidaktiven Segmenten angeordnet sind. Die schneidaktiven Segmente beidseits eines Zahns sind gleich lang ausgebildet.

Aufgabe der Erfindung ist es, ein Schneidelement der eingangs genannten Art anzugeben, mit welchem ein effizientes Einschneiden in das Erdreich mit vollständiger Durchtrennung des vorhandenen Unkrautes bzw. Beikrautes erzielt werden kann.

Des Weiteren soll eine Verwendung eines solchen Schneidelementes angegeben werden.

Die erste Aufgabe wird erfindungsgemäß mit einem Schneidelement nach Anspruch 1 gelöst.

Ein mit der Erfindung erzielter Vorteil ist insbesondere darin zu sehen, dass durch die spezielle Konstruktion der Zähne des Schneidbereiches des Schneidelementes ein effizientes Einfangen und Abtrennen des Unkrautes bzw. Beikrautes ermöglicht wird. Dadurch wird die vollständige Durchtrennung des Erdreichs erreicht, wodurch Regenwasser und auch Grundwasser ungehindert die Wurzeln der Nutzpflanzen erreichen können und somit in der Folge gutes Ernteergebnis erzielt werden kann.

Ein ökologischer Vorteil des vollständigen Durchtrennens von Unkraut liegt darin, dass das Unkraut auf diese Weise vernichtet wird und somit deutlich weniger Spritzmittel zur Vernichtung von Unkraut eingesetzt werden muss. Dies trägt maßgeblich zur Schonung der Umwelt bei. Ein weiterer Vorteil eines erfindungsgemäßen Schneidelementes liegt darin, dass das Schneidelement aus Hartmetall ausgebildet ist. Dies erhöht die Verschleißfestigkeit der Schneidelemente und verlängert dadurch deren Einsatzzeit am Bodenbearbeitungswerkzeug.

Es hat sich bewährt, dass die erste Flanke des zumindest eines Zahnes in einer Arbeitsrichtung nach der zweiten Flanke des zumindest einen Zahnes angeordnet ist. Auf diese Weise kann das auf das Schneidelement auftreffende Unkraut an der ersten Flanke abgeschnitten werden. Sollte dies aufgrund eines für einen vollständigen Schnitt ungünstigen Auftreffwinkels des Unkrautes auf das Schneidelement oder der Menge des Unkrautes nicht erreicht werden können, kann das Unkraut in der nachfolgenden, zweiten Flanke des Zahnes abgetrennt werden. Sollte das Unkraut bzw. Beikraut am ersten Zahn vorbeigleiten oder ausweichen, wird am nächsten Zahn wieder die Möglichkeit eines Schnittes gegeben, was sich mehrmals wiederholt. Dadurch wird erreicht, dass das Unkraut bzw. Beikraut zumindest weitgehend durchtrennt wird.

Bevorzugt schließt die zweite Flanke mit einer gedachten Ebene, welche parallel zur Stirnseite liegt, in einer Draufsicht einen Winkel von 0° bis 60°, vorzugsweise 2° bis 45°, insbesondere 5° bis 15°, ein. Dadurch kann ein kontrolliertes Abschneiden des Unkrautes bzw. Beikrautes an der zweiten Flanke erreicht werden. Sollte das Unkraut bzw. Beikraut beispielsweise aufgrund dessen Menge an der zweiten Flanke nicht vollständig geschnitten werden können, wird es über die zweite Flanke zu einem nachfolgenden Zahn weitergeleitet und kann dort geschnitten werden.

Es ist von Vorteil, wenn die zweite Flanke des zumindest einen Zahnes unter einem Winkel von 60° bis 120°, vorzugsweise 70° bis 110°, insbesondere 90°, zu der ersten Flanke eines nachfolgenden Zahnes angeordnet ist. Dadurch wird zwischen erstem und zweitem Zahn ein Winkel gebildet, in welchem das Unkraut, welches vom ersten Zahn nicht oder unvollständig geschnitten wurde, eingefangen und von der ersten Flanke des nachfolgenden Zahnes abgeschnitten werden kann.

Optional ist die Profillinie der zweiten Flanke des Zahnes mehr als 1,1-mal, zumindest doppelt, insbesondere fünfmal so lang wie die Profillinie der ersten Flanke des zumindest einen Zahnes. Durch diese Verzahnung kann die erste und kürzere Flanke des Zahnes vorrangig zum Einfangen und auch bereits zum Abtrennen des Unkrautes bzw. Beikrautes wirksam werden.

Zweckmäßigerweise weist der Schneidbereich zwei bis zehn, vorzugsweise drei bis fünf, insbesondere vier Zähne auf. Dadurch wird das Abtrennen eines potenziell vorbeigleitenden Unkrautes sichergestellt, da beispielsweise vor allem eine größere Menge von Unkraut in mehreren Positionen eingefangen und abgetrennt werden muss, weshalb eine Aneinanderreihung von mehreren Zähnen von Vorteil ist.

Bevorzugt kann eine Länge des Schneidelementes zumindest gleich lang, vorzugsweise doppelt so lang, insbesondere dreimal so lang, wie eine Breite des Schneidelementes sein und es ist von Vorteil, wenn die Länge des Schneidelementes zumindest gleich lang, vorzugsweise fünfmal so lang, insbesondere zwanzigmal so lang wie eine Höhe des Schneidelementes ist. Dadurch kann ein entlang der Länge eines Schneidelementes angeordneter aktiver Schneidbereich verlängert werden bei gleichzeitig reduziertem Materialaufwand für den Körper des Schneidelement durch die im Vergleich zur Länge verringerten Breite und verringerte Höhe des Schneidelementes.

Das weitere Ziel wird dadurch erreicht, dass ein erfindungsgemäßes Schneidelement für ein landwirtschaftliches Bodenbearbeitungswerkzeug zum Einschneiden im Erdreich verwendet wird.

Ein Vorteil einer solchen Verwendung ergibt sich daraus, dass mit dem Bodenbearbeitungswerkzeug, welches zumindest ein erfindungsgemäßes Schneidelement aufweist, ein effizientes Einschneiden in das Erdreich erreicht wird, wodurch eine gute Bodenbearbeitung realisierbar ist. Dies wird insbesondere dadurch erreicht, dass mehrere Schneidelemente entlang einer Kante eines Bodenbearbeitungswerkzeuges angeordnet sind. Darüber hinaus verlängert sich die Einsatzzeit des Bodenbearbeitungswerkzeuges durch Verwendung eines Hartmetalls für die Schneidelemente.

Bei einem Bodenbearbeitungswerkzeug für die Landwirtschaft, insbesondere zur aufbereitenden Bearbeitung von landwirtschaftlichen Flächen, ist es günstig, wenn dieses zumindest ein erfindungsgemäßes Schneidelement aufweist. Insbesondere durch die Anordnung von mehreren Schneidelementen wird das effiziente Abtrennen des Unkrautes und somit eine effiziente Bodenbearbeitung sichergestellt.

Es ist vorteilhaft, wenn an einem Grundkörper zumindest erste, in separaten Sitzen angeordnete Schneidelemente entlang einer Arbeitskante angeordnet sind. Auf diese Weise ist es möglich, die Schneidelemente vor einem Anlöten zu positionieren, wobei jedes Schneidelement aufgrund der separaten Sitze einzeln positioniert werden kann. Weiters wird bei Bearbeitung des Erdreichs eine auf das Schneidelement einwirkende Kraft nicht auf die anderen Schneidelemente übertragen.

Darüber hinaus kann es günstig sein, wenn die ersten Schneidelemente in einer Draufsicht auf den Grundkörper entlang der Arbeitskante zumindest abschnittsweise zueinander rückspringend versetzt angeordnet sind. Auf diese Weise ist es möglich, eine gedankliche Überlappung der Schneidelemente in einer Arbeitsrichtung zu erreichen und somit den Spalt zwischen den angeordneten Schneidelementen zu überbrücken. Dadurch kann ein flächiges Durchtrennen des Erdreichs erreicht werden. Ein weiterer Vorteil ergibt sich insofern, dass durch eine versetzte Anordnung die Schneidelemente in unterschiedlichen Ebenen aktiv werden und somit je nach Auftreffrichtung bzw. -winkel auf das Bodenbearbeitungsgerät das Unkraut effizient durchtrennt werden kann.

Bevorzugt weisen die Sitze des Bodenbearbeitungswerkzeuges einen Anschlag zur Positionierung der ersten Schneidelemente auf, wodurch ein präzises Positionieren der Schneidelemente auf den Sitzen und somit am Grundkörper des Bodenbearbeitungswerkzeuges erreicht werden kann.

Eine einfache Herstellbarkeit der Sitze des Bodenbearbeitungswerkzeuges kann durch Fräsen erreicht werden. Dadurch ist eine rasche und effiziente Fertigung des Bodenbearbeitungswerkzeuges möglich, da unmittelbar nach dem Fräsen die Schneidelemente angelötet werden können.

Um Kosten des Bodenbearbeitungswerkzeuges zu verringern, kann der Grundkörper zumindest teilweise aus Stahl gebildet sein. Ein weiterer Vorteil einer Fertigung des Grundkörpers aus Stahl besteht in einer einfachen, weiteren Bearbeitbarkeit des Grundkörpers, beispielsweise hinsichtlich des Fräsens der Sitze der Schneidelemente.

Grundsätzlich kann der Grundkörper eine beliebige Form aufweisen. Für das effiziente Einschneiden in das Erdreich ist der Grundkörper des Bodenbearbeitungswerkzeuges in einer Draufsicht im Wesentlichen bevorzugt v-förmig ausgebildet. Dadurch können zwei stirnseitige Kanten des Grundkörpers schneidaktiv wirken.

Optional sind die ersten Schneidelemente mit einem Winkel von 20° bis 50°, vorzugsweise 25° bis 35°, zu einer Grundfläche des Grundkörpers eines Bodenbearbeitungswerkzeuges positioniert. Dadurch wird die gewünschte Schnittleistung durch einen günstigen Keilwinkel erreicht, wobei gleichzeitig ein Verschleiß der Schneidelemente minimiert werden kann.

Darüber hinaus kann es günstig sein, wenn Bereiche der Schneidkanten entlang der Arbeitskante des Bodenbearbeitungswerkzeuges auf gleicher Höhe und/oder hintereinander angeordnet sind, wodurch ein durchgehender und flächiger Schnitt in das Erdreich auf effiziente Weise erreicht wird.

Es kann vorteilhaft sein, wenn am Grundkörper des Bodenbearbeitungswerkzeuges Kassetten vorgesehen sind, auf welchen die Schneidelemente angeordnet sind, wobei die Kassetten vorzugsweise aus einem Stahl gebildet sind. Der sich daraus ergebende Vorteil liegt einerseits darin, dass der Grundkörper auf diese Weise vor Verschleiß geschont wird und andererseits, dass bei Verschleiß der Kassetten diese einzeln ausgetauscht werden können und somit bei lokalem Verschleiß nicht der gesamte Grundkörper ausgetauscht werden muss. Auf diese Weise wird eine lange Einsatzzeit des

Bodenbearbeitungswerkzeuges erreicht und eine Wartung desselben kann auf einfache und kostengünstige Art durchgeführt werden.

Weitere Merkmale, Vorteile und Wirkungen ergeben sich aus den nachfolgenden dargestellten Ausführungsbeispielen. In den Zeichnungen, auf welche dabei Bezug genommen wird, zeigen:
Fig. 1a eine schematische perspektivische Darstellung eines erfindungsgemäßen Schneidelementes aus Hartmetall für ein landwirtschaftliches Bodenbearbeitungswerkzeug zum Einschneiden in ein Erdreich;
Fig. 1b eine Draufsicht auf ein Schneidelement gemäß Fig. 1;
Fig. 2 eine Draufsicht auf ein erfindungsgemäßes Bodenbearbeitungswerkzeug für die Landwirtschaft;
Fig. 3a eine stirnseitige Ansicht des Bodenbearbeitungswerkzeuges gemäß Fig. 2;
Fig. 3b eine perspektivische Darstellung eines Bodenbearbeitungswerkzeuges gemäß Fig. 2.

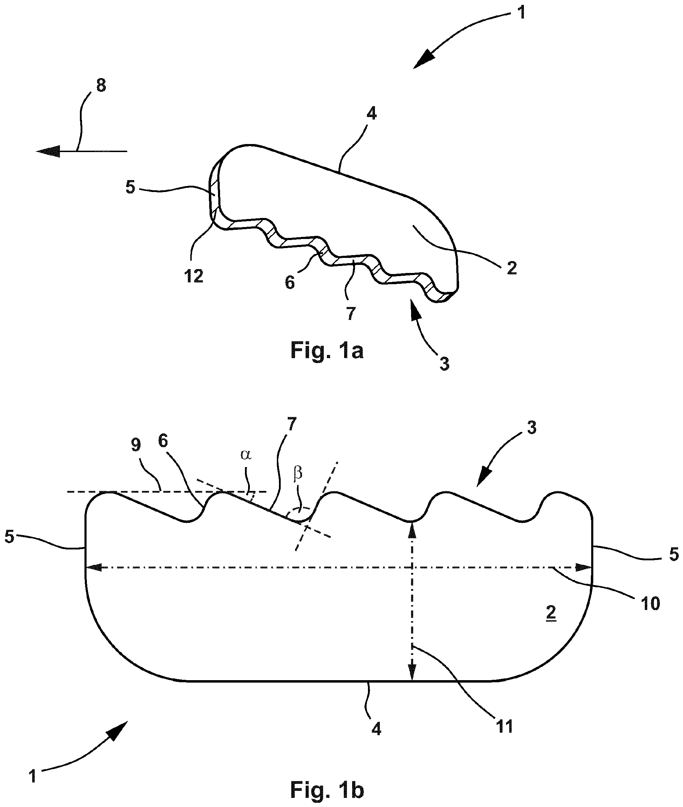

Fig. 1a zeigt eine schematische und perspektivische Darstellung eines Schneidelementes 1 aus Hartmetall für ein landwirtschaftliches Bodenbearbeitungswerkzeug 13 zum Einschneiden in ein Erdreich. Das Schneidelement 1 weist eine Oberseite 2, eine in dieser Darstellung nicht sichtbare, der Oberseite 2 gegenüberliegende Unterseite, eine Rückseite 4, eine der Rückseite 4 gegenüberliegenden Stirnseite 3 und zwei Seitenflächen 5 auf, wobei eine der beiden Seitenflächen 5 in dieser Darstellung durch die Oberseite 2 verdeckt wird. Des Weiteren ist ersichtlich, dass die Stirnseite 3 einen Schneidbereich mit mehreren Zähnen aufweist, wobei jeder Zahn jeweils eine erste Flanke 6 und eine zweite Flanke 7 aufweist. Die erste Flanke 6 ist in einer Arbeitsrichtung 8 vor der zweiten Flanke 7 eines Zahnes angeordnet. Darüber hinaus ist eine Höhe 12 des Schneidelementes 1 gekennzeichnet.

Fig. 1b zeigt eine Draufsicht auf das Schneidelement 1 aus Hartmetall, wobei der Blick auf die Oberseite 2, welche von zwei Seitenflächen 5, der Rückseite 4 und der der Rückseite 4 gegenüberliegende Stirnseite 3 begrenzt ist. Die Abmessungen des Schneidelementes 1 in einer Draufsicht setzen sich aus einer Länge 10 und einer Breite 11 des Schneidelementes 1 zusammen, wobei die Länge 10 etwa dreimal so lang wie die Breite 11 und etwa zwanzigmal so lang wie die Höhe 12 des Schneidelementes 1 ist. An der Stirnseite 3 ist ein Schneidbereich mit mehreren Zähnen angeordnet, wobei im dargestellten Ausführungsbeispiel eine Profillinie der zweiten Flanke 7 etwa doppelt so lang wie eine Profillinie der ersten Flanke 6 ist. Darüber hinaus schließt die zweite Flanke 7 mit einer gedachten Ebene 9, welche parallel zur Stirnseite 3 liegt, im dargestellten Ausführungsbeispiel einen Winkel α von etwa 22° ein und die zweite Flanke 7 des Zahnes schließt mit der ersten Flanke 6 eines nachfolgenden Zahnes einen Winkel β ein, welcher im dargestellten Ausführungsbeispiel einen Wert von etwa 90° einnimmt.

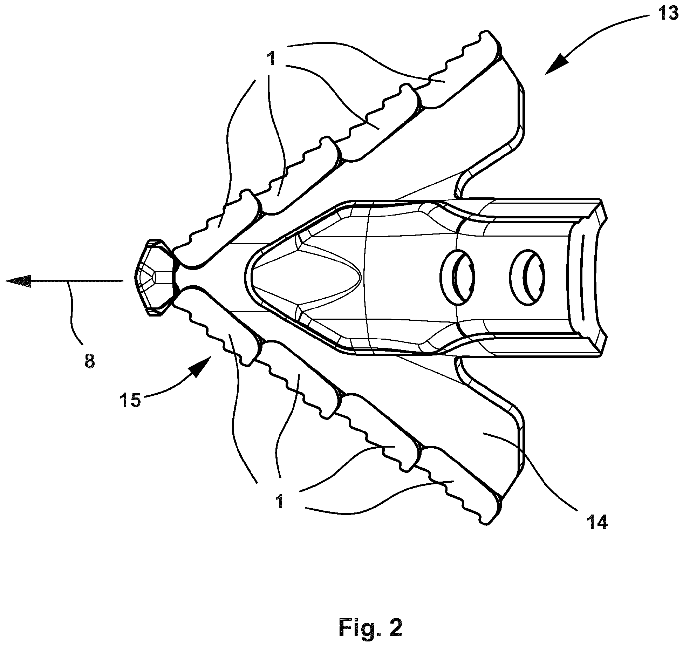

In Fig. 2 ist eine Draufsicht auf ein Bodenbearbeitungswerkzeug 13 für die Landwirtschaft zum Einschneiden in ein Erdreich dargestellt. Das dargestellte Bodenbearbeitungswerkzeug 13 weist einen Grundkörper 14 aus Stahl auf, welcher grundsätzlich jede Form aufweisen und ein- oder mehrteilig ausgebildet sein kann. Des Weiteren umfasst der Grundkörper 14 zwei seitliche Flügel und ist in der Draufsicht im Wesentlichen v-förmig ausgebildet, wobei beide Seiten des v-förmigen Grundkörpers 14 einer Arbeitsrichtung 8 zugewandt angeordnet und als Arbeitskanten 15 ausgebildet sind. An jeder Arbeitskante 15 sind jeweils vier erfindungsgemäße Schneidelemente 1 positioniert, welche als Schneidplatten aus Hartmetall ausgebildet und zueinander rückspringend versetzt in separaten Sitzen angeordnet sind. Die Sitze weisen jeweils einen Anschlag auf, wodurch die Schneidplatten einfach positioniert werden können und eine separate Kraftableitung von den einzelnen Schneidplatten auf den Grundkörper 14 ermöglicht wird.

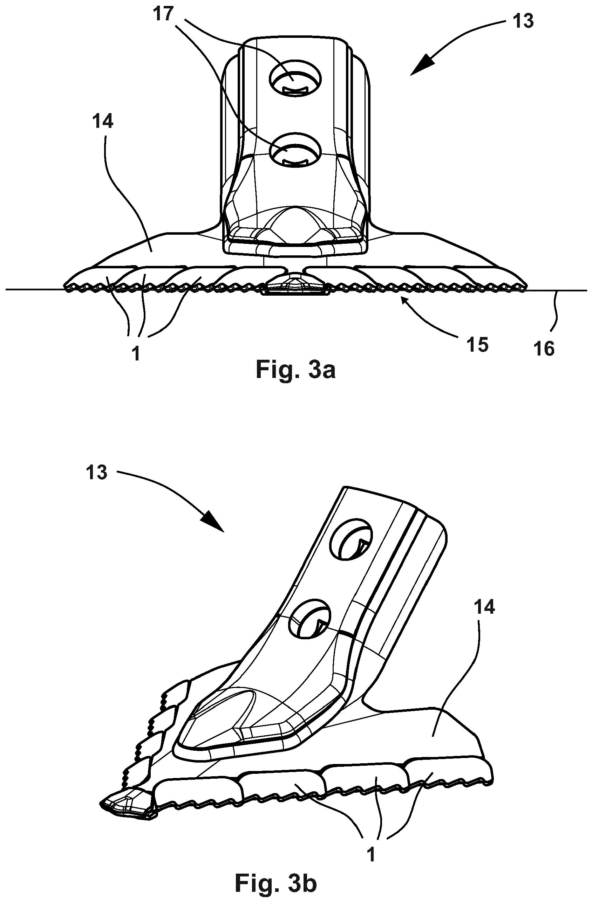

In Fig. 3a ist eine stirnseitige Ansicht des Bodenbearbeitungswerkzeuges 13 dargestellt. Dabei ist ersichtlich, dass die an einem Grundkörper 14 angeordneten erfindungsgemäßen Schneidelemente 1 in einem Winkel von etwa 30° zu einer Grundfläche 16 des Grundkörpers 14 positioniert sind. Weiter sind am Grundkörper 14 zwei Öffnungen 17 angeordnet, über welche der Grundkörper 14 beispielsweise mittelbar oder unmittelbar an einem Traktor befestigt werden kann. Darüber hinaus ist in Fig. 3a ersichtlich, dass durch die gewählte Anordnung der Schneidplatten am Grundkörper 14 eine durchgängige Schneidkante an der Arbeitskante 15 des Grundkörpers 14 erreicht wird. Dadurch kann ein flächiger und durchgängiger Einschnitt in ein Erdreich mit dem Bodenbearbeitungswerkzeug 13 durchgeführt werden.

In Fig. 3b ist eine perspektivische Ansicht des Bodenbearbeitungswerkzeuges 13 ersichtlich, wobei am Grundkörper 14 die Schneidelemente 1 angeordnet sind.

Die spezielle Konstruktion der Zähne im Schneidbereich entlang der Stirnseite 3 des Schneidelementes 1 ermöglicht eine besonders effiziente Abtrennung von Unkraut und auch ein verbessertes, durchgängiges Einschneiden in ein Erdreich. Durch die Verwendung eines erfindungsgemäßen Schneidelementes 1 für ein landwirtschaftliches Bodenbearbeitungswerkzeug 13 kann somit eine effiziente und gute Bodenbearbeitung durch Verhinderung einer Verdichtung des Bodens im Vorfeld einer Aussaat für das Erzielen eines guten Ernteergebnisses erreicht werden. Darüber hinaus kann durch die vollständige Abtrennung von Unkraut bzw. Beikraut, wodurch dieses vernichtet wird, ein Einsatz von Spritzmittel deutlich reduziert werden. Auf diese Weise wird die Umwelt maßgeblich geschont.

## Patentansprüche

1. Schneidelement (1) aus Hartmetall für ein landwirtschaftliches Bodenbearbeitungswerkzeug (13) zum Einschneiden in ein Erdreich, aufweisend eine Oberseite (2) und eine Unterseite sowie eine Stirnseite (3), eine der Stirnseite (3) gegenüberliegende Rückseite (4) und zumindest eine Seitenfläche (5), wobei die Oberseite (2) und die Unterseite über Stirnseite (3), Rückseite (4) und die zumindest eine Seitenfläche (5) verbunden sind und die Stirnseite (3) einen Schneidbereich aufweist, **dadurch gekennzeichnet, dass** die Stirnseite (3) einen Schneidbereich mit mehreren Zähnen aufweist, wobei zumindest ein Zahn mit einer ersten Flanke (6) und einer zweiten Flanke (7) gebildet ist, wobei die erste Flanke (6) und die zweite Flanke (7) Teil des Schneidbereiches sind, wobei eine Profillinie der ersten Flanke (6) und eine Profillinie der zweiten Flanke (7) unterschiedlich lang sind.

2. Schneidelement (1) nach Anspruch 1, **dadurch gekennzeichnet, dass** die erste Flanke (6) des zumindest einen Zahnes in einer Arbeitsrichtung (8) nach der zweiten Flanke (7) des zumindest einen Zahnes angeordnet ist.

3. Schneidelement (1) nach Anspruch 1 oder 2, **dadurch gekennzeichnet, dass** die zweite Flanke (7) mit einer gedachten Ebene (9), welche parallel zur Stirnseite (3) liegt, in einer Draufsicht einen Winkel (α) von 0° bis 60°, vorzugsweise 2° bis 45°, insbesondere 5° bis 15°, einschließt.

4. Schneidelement (1) nach einem der Ansprüche 1 bis 3, **dadurch gekennzeichnet, dass** die zweite Flanke (7) des zumindest einen Zahnes unter einem Winkel (β) von 60° bis 120°, vorzugsweise 70° bis 110°, insbesondere 90°, zu der ersten Flanke (6) eines nachfolgenden Zahnes angeordnet ist.

5. Schneidelement (1) nach einem der Ansprüche 1 bis 4, **dadurch gekennzeichnet, dass** die Profillinie der zweiten Flanke (7) des Zahnes mehr als 1,1-mal, zumindest doppelt, insbesondere fünfmal so lang wie die Profillinie der ersten Flanke (6) des zumindest einen Zahnes ist.

6. Schneidelement (1) nach einem der Ansprüche 1 bis 5, **dadurch gekennzeichnet, dass** der Schneidbereich zwei bis zehn, vorzugsweise drei bis fünf, insbesondere vier Zähne aufweist.

7. Schneidelement (1) nach einem der Ansprüche 1 bis 6, **dadurch gekennzeichnet, dass** eine Länge (10) des Schneidelementes (1) zumindest gleich lang, vorzugsweise doppelt so lang, insbesondere dreimal so lang, wie eine Breite (11) des Schneidelementes (1) ist.

8. Schneidelement (1) nach Anspruch 7, **dadurch gekennzeichnet, dass** die Länge (10) des Schneidelementes (1) zumindest gleich lang, vorzugsweise fünfmal so lang, insbesondere zwanzigmal so lang wie eine Höhe (12) des Schneidelementes (1) ist.

9. Verwendung eines Schneidelements (1) nach einem der Ansprüche 1 bis 8 für ein landwirtschaftliches Bodenbearbeitungswerkzeug (13) zum Einschneiden in ein Erdreich.

10. Bodenbearbeitungswerkzeug (13) für die Landwirtschaft, insbesondere zur aufbereitenden Bearbeitung von landwirtschaftlichen Flächen, aufweisend zumindest ein Schneidelement (1) nach einem der Ansprüche 1 bis 8.

11. Bodenbearbeitungswerkzeug (13) nach Anspruch 10, **dadurch gekennzeichnet, dass** an einem Grundkörper (14) zumindest erste, in separaten Sitzen angeordnete Schneidelemente (1) entlang einer Arbeitskante (15) angeordnet sind.

12. Bodenbearbeitungswerkzeug (13) nach Anspruch 11, **dadurch gekennzeichnet, dass** die ersten Schneidelemente (1) in einer Draufsicht auf den Grundkörper (14) entlang der Arbeitskante (15) zumindest abschnittsweise zueinander rückspringend versetzt angeordnet sind.

13. Bodenbearbeitungswerkzeug (13) nach Anspruch 11 oder 12, **dadurch gekennzeichnet, dass** die Sitze einen Anschlag zur Positionierung der ersten Schneidelemente (1) aufweisen.

14. Bodenbearbeitungswerkzeug (13) nach einem der Ansprüche 11 bis 13, **dadurch gekennzeichnet, dass** die ersten Schneidelemente (1) mit einem Winkel von 20° bis 50°, vorzugsweise 25° bis 35°, zu einer Grundfläche (16) des Grundkörpers (14) positioniert sind.

15. Bodenbearbeitungswerkzeug (13) nach einem der Ansprüche 11 bis 14, **dadurch gekennzeichnet, dass** Bereiche der Schneidkanten entlang der Arbeitskante (15) auf gleicher Höhe (12) und/oder hintereinander angeordnet sind.

## Claims

1. A cutting element (1) made of hard metal for an agricultural soil cultivation tool (13) for cutting into soil, having a top side (2) and a bottom side as well as a front side (3), a back side (4) located opposite the front side (3), and at least one side surface (5), wherein the top side (2) and the bottom side are connected via front side (3), back side (4) and the at least one side surface (5), and the front side (3) has a cutting region, **characterized in that** the front side (3) has a cutting region comprising several teeth, wherein at least one tooth is formed with a first flank (6) and a second flank (7), wherein the first flank (6) and the second flank (7) are part of the cutting region, wherein a profile line of the first flank (6) and a profile line of the second flank (7) have different lengths.

2. The cutting element (1) according to claim 1, **characterized in that** the first flank (6) of the at least one tooth is arranged in a working direction (8) downstream from the second flank (7) of the at least one tooth.

3. The cutting element (1) according to claim 1 or 2, **characterized in that**, in a top view, the second flank (7) draws an angle (α) of 0° to 60°, preferably 2° to 45°, in particular 5° to 15°, with an imaginary plane (9), which lies parallel to the front side (3).

4. The cutting element (1) according to one of claims 1 to 3, **characterized in that** the second flank (7) of the at least one tooth is arranged at an angle (β) of 60° to 120°, preferably 70° to 110°, in particular 90°, to the first flank (6) of a subsequent tooth.

5. The cutting element (1) according to one of claims 1 to 4, **characterized in that** the profile line of the second flank (7) of the tooth is more than 1.1-times, at least twice, in particular five times, as long as the profile line of the first flank (6) of the at least one tooth.

6. The cutting element (1) according to one of claims 1 to 5, **characterized in that** the cutting region has two to ten, preferably three to five, in particular four, teeth.

7. The cutting element (1) according to one of claims 1 to 6, **characterized in that** a length (10) of the cutting element (1) is at least equally long, preferably twice as long, in particular three times as long, as a width (11) of the cutting element (1).

8. The cutting element (1) according to claim 7, **characterized in that** the length (10) of the cutting element (1) is at least equally long, preferably five times as long, in particular twenty times as long, as a height (12) of the cutting element (1).

9. Use of a cutting element (1) according to one of claims 1 to 8 for an agricultural soil cultivation tool (13) for cutting into soil.

10. A soil cultivation tool (13) for agriculture, in particular for the preparatory cultivation of agricultural surfaces, having at least one cutting element (1) according to one of claims 1 to 8.

11. The soil cultivation tool (13) according to claim 10, **characterized in that**, on a base body (14), at least first cutting elements (1), which are arranged in separate seats, are arranged along a working edge (15).

12. The soil cultivation tool (13) according to claim 11, **characterized in that**, in a top view onto the base body (14), the first cutting elements (1) are arranged offset from one another in a recessed manner along the working edge (15) at least in sections.

13. The soil cultivation tool (13) according to claim 11 or 12, **characterized in that** the seats have a stop for positioning the first cutting elements (1).

14. The soil cultivation tool (13) according to one of claims 11 to 13, **characterized in that** the first cutting elements (1) are positioned at an angle of 20° to 50°, preferably 25° to 35°, to a base surface (16) of the base body (14).

15. The soil cultivation tool (13) according to one of claims 11 to 14, **characterized in that** regions of the cutting edges are arranged at the same height (12) and/or one behind the other along the working edge (15).

## Revendications

1. Élément de coupe (1) en carbure, destiné à un outil agricole de travail du sol (13) voué à entailler un terrain, comportant une face supérieure (2) et une face inférieure, ainsi qu'une face frontale (3), une face arrière (4) opposée à la face frontale (3) et au moins une surface latérale (5), la face supérieure (2) et la face inférieure étant assemblées par l'intermédiaire de la face frontale (3), de la face arrière (4) et de l'au moins une surface latérale (5) et la face frontale (3) comportant une zone de coupe, **caractérisé en ce que** la face frontale (3) comporte une zone de coupe munie de plusieurs dents, au moins une dent étant constituée avec un premier flanc (6) et un deuxième flanc (7), le premier flanc (6) et le deuxième flanc (7) étant une partie de la zone de coupe, une ligne de profil du premier flanc (6) et une ligne de profil du deuxième flanc (7) étant de longueur différente.

2. Élément de coupe (1) selon la revendication 1, **caractérisé en ce que** dans une direction de travail (8), le premier flanc (6) de l'au moins une dent est placé après le deuxième flanc (7) de l'au moins une dent.

3. Élément de coupe (1) selon la revendication 1 ou 2, **caractérisé en ce que**, dans une vue en élévation, le deuxième flanc (7) inclut avec un plan (9) virtuel, lequel se situe à la parallèle de la face frontale (3) un angle (α) de 0 ° à 60°, de préférence de 2 ° à 45°, notamment de 5° à 15°.

4. Élément de coupe (1) selon l'une quelconque des revendications 1 à 3, **caractérisé en ce que** le deuxième flanc (7) de l'au moins une dent est placé sous un angle (β) de 60° à 120°, de préférence de 70° à 110°, notamment de 90°, par rapport au premier flanc (6) d'une dent suivante.

5. Élément de coupe (1) selon l'une quelconque des revendications 1 à 4, **caractérisé en ce que** la ligne de profil du deuxième flanc (7) de la dent est plus longue d'au moins 1,1, sa longueur est d'au moins le double, notamment le quintuple de la longueur de la ligne de profil du premier flanc (6) de l'au moins une dent.

6. Élément de coupe (1) selon l'une quelconque des revendications 1 à 5, **caractérisé en ce que** la zone de coupe comporte de deux à dix, de préférence de trois à cinq, notamment quatre dents.

7. Élément de coupe (1) selon l'une quelconque des revendications 1 à 6, **caractérisé en ce qu'**une longueur (10) de l'élément de coupe (1) est au moins de longueur égale, de préférence du double de la longueur, notamment du triple de la longueur qu'une largeur (11) de l'élément de coupe (1).

8. Élément de coupe (1) selon la revendication 7, **caractérisé en ce que** la longueur (10) de l'élément de coupe (1) est au moins de longueur identique, de préférence du quintuple de la longueur, notamment de vingt fois la longueur d'une hauteur, (12) de l'élément de coupe (1).

9. Utilisation d'un élément de coupe (1) selon l'une quelconque des revendications 1 à 8 pour un outil agricole de travail du sol (13), pour entailler un terrain.

10. Outil de travail du sol (13) pour le milieu agricole, notamment destiné à travailler des surfaces agricoles, comportant au moins un élément de coupe (1) selon l'une quelconque des revendications 1 à 8.

11. Outil de travail du sol (13) selon la revendication 10, **caractérisé en ce que** sur un corps de base (14) au moins des premiers éléments de coupe (1) sont placés dans des sièges séparés, le long d'une arête de travail (15).

12. Outil de travail du sol (13) selon la revendication 11, **caractérisé en ce que**, dans une vue en élévation sur le corps de base (14) , les premiers élément de coupe (1) sont placés sur l'arête de travail (15) en étant mutuellement décalés en retrait au moins par endroits.

13. Outil de travail du sol (13) selon la revendication 11 ou 12, **caractérisé en ce que** les sièges comportent une butée, pour le positionnement des premiers éléments de coupe (1).

14. Outil de travail du sol (13) selon l'une quelconque des revendications 11 à 13, **caractérisé en ce que** les premiers élément de coupe (1) sont positionnés avec un angle de 20° à 50°, de préférence de 25° à 35° par rapport à une surface de base (16) du corps de base (14) .

15. Outil de travail du sol (13) selon l'une quelconque des revendications 11 à 14, **caractérisé en ce que** des zones des arêtes de coupe sont placées le long de l'arête de travail (15) à hauteur (12) identique et / ou les unes derrière les autres.
